# EUROPEAN PATENT SPECIFICATION

(11) **EP 0 448 414 B1**
(45) Date of publication and mention of the grant of the patent: **26.10.1994**
(21) Application number: 91302550.8
(22) Date of filing: 22.03.1991
(51) Int. Cl.: G01K 7/24, G01K 7/16

(54) **Electrical circuits**
Elektrische Schaltungen
Circuits électriques

(30) Priority: 23.03.1990 US 498226
(43) Date of publication of application: 25.09.1991
(73) Proprietor: RESPIRATORY SUPPORT PRODUCTS INC, Irvine, California 92714 (US)
(72) Inventor: Beran, Anthony Vincent, Santa Ana, California 92705 (US); Shigezawa, Gordon, Irvine, California 92714 (US)
(74) Representative: Flint, Jonathan McNeill

(56) References cited:
- EP-A- 0 025 653
- EP-A- 0 309 664
- DE-A- 4 018 281

## Description

This invention relates to temperature monitoring apparatus having a thermistor temperature probe and a temperature monitor adapted to monitor temperature at a dual thermistor probe having a first resistance versus temperature characteristic.

Use of disposable temperature probes for single patient application is common today because of the high cost of cleaning and re-sterilizing medical products. The well-known 700 series disposable temperature probe is considerably more costly than single thermistor disposable temperature probes. Most of the additional cost of the 700 series probe is attributable to the cost of the sensor element of the probe, which employs two thermistors.

Temperature monitoring apparatus is known in which the monitor is configured to monitor temperature at a single thermistor temperature probe, such as described in EP-A2-0309664 and EP-A1-0025653. Unfortunately, manufacturers of patient monitors continue to make monitors which use only the 700 series, dual thermistor probes. Users of such patient monitors are forced to purchase 700 series probes or an electronic adaptor. The typical electronic adaptor accepts signals from a low cost thermocouple-type probe and simulates the resistances of the 700 series thermistor elements. While such an adaptor allows use of low cost thermocouple probes, it also adds the cost of maintenance, battery replacement, and calibration, as well as introducing its own errors to the temperature monitoring procedure.

It is therefore an object of the invention to improve or reduce the cost of disposable temperature probes and to provide apparatus employing a single thermistor and having a resistance versus temperature characteristic comparable to that of a two-thermistor or 700 series disposable probe.

According to one aspect of the present invention there is provided apparatus of the above-specified kind, characterised in that the thermistor temperature probe is a single thermistor temperature probe having a second resistance versus temperature characteristic different from the first characteristic, that the apparatus includes a resistor arrangement comprising a shunt resistor that alters the slope of the characteristic, and a series resistor that adds a constant resistance to the characteristic to simulate the first resistance versus temperature characteristic of a dual thermistor probe, and that the resistor arrangement is removably connectable between the single thermistor probe and the monitor.

The resistors are preferably connected to simulate a dual thermistor probe of the kind having first and second thermistors each having a first terminal connected together and a second terminal connected together via a resistor.

The resistor arrangement may be a cable, the resistors being included in the cable and the cable having a connector at one end connected to the single thermistor probe and a connector at the other end connected to the temperature monitor. The resistors may be housed within one of the connectors of the cable.

A circuit according to the present invention will now be described, by way of example, with reference to the accompanying drawings, in which:
- Figure 1: is a circuit schematic of a prior art dual thermistor circuit:
- Figure 2: is a circuit schematic of a prior application of the circuit of Figure 1;
- Figure 3: is a circuit schematic of an application of the circuit of Figure 2 to a patient monitor;
- Figure 4: is a circuit schematic of a prior art dual thermistor circuit;
- Figure 5: is a circuit schematic of the preferred embodiment of the invention;
- Figure 6: is a graph of error versus temperature between the resistance versus temperature characteristics of circuits according to Figure 4 and Figure 5;
- Figure 7: is a circuit schematic showing application of the preferred embodiment in a patient monitor;
- Figure 8: is a top view of a male-female connector;
- Figure 9: shows an end view of each of the connector elements of Figure 8; and
- Figure 10: is a sectional view taken at 10 - 10 of Figure 8.

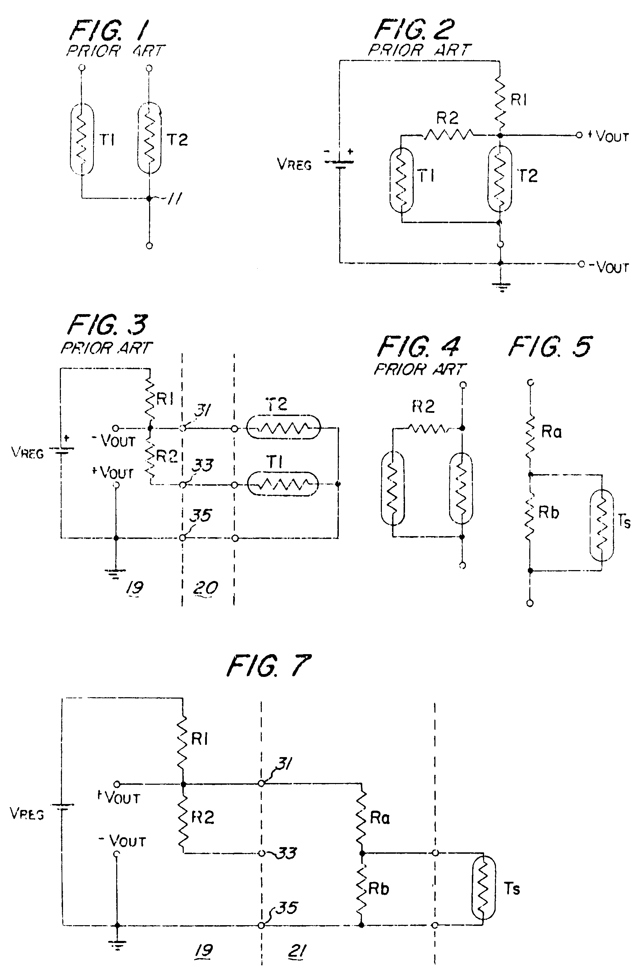

The Yellow Springs Instrument (YSI) 700 series thermistor is a composite structure consisting of two thermistors T1, T2 with one lead connected in common at a junction 11, as shown in Figure 1. Both thermistors T1, T2 are assumed equilibrated to the same temperature. The resistance in Kohms versus temperature characteristic of the YSI thermistors T1 T2 is illustrated in the following table:

| **TEMP** | **T1** | **T2** |
|---|---|---|
| 0 | 19.59 | 94.98 |
| 5 | 15.24 | 74.44 |
| 10 | 11.94 | 58.75 |
| 15 | 9.428 | 46.67 |
| 20 | 7.496 | 37.3 |
| 25 | 6 | 30 |
| 30 | 4.834 | 24.27 |
| 35 | 3.918 | 19.47 |
| 40 | 3.196 | 16.15 |
| 45 | 2.62 | 13.28 |
| 50 | 2.162 | 10.97 |
| 55 | 1.792 | 9.109 |

The thermistor assembly of Figure 1 is typically connected to a half bridge circuit (Figure 2) consisting of two fixed resistors, R1 and R2, and a regulated voltage source V_{reg} . The values of the fixed resistors R1, R2 are chosen to minimize nonlinearity of the voltage output (Vₒᵤₜ) over the range of the desired measurement temperatures.

In a clinical patient temperature monitor application, the fixed resistors R1, R2 are located in the patient temperature monitor 19 and interconnection of the thermistor elements T1, T2 is achieved through a three-conductor cable 20 as shown in Figure 3.

According to the preferred embodiment, the network of the dual-thermistor elements T1, T2 and R2 shown in Figure 4 and used in Figure 2 may be simplified to a single dual-terminal resistance which varies with temperature. A network exhibiting the same resistance versus temperature characteristics of the network in Figure 4 may then be substituted between the external connection of R1 and ground.

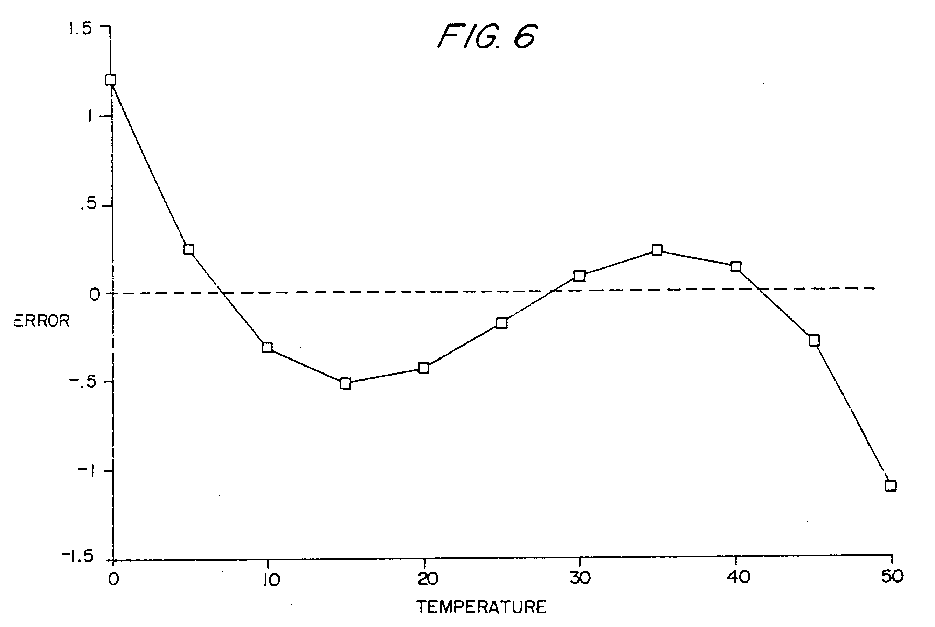

A network employing a single thermistor and exhibiting a resistance temperature characteristic substantially similar to the circuit of Figure 4 is shown in Figure 5. The circuit of Figure 5 employs a thermistor Tₛ connected in parallel with a shunt resistor R_{b}. The shunt resistor R_{b} is connected in series with a resistor Rₐ. The values of Rₐ and R_{b} may be selected to be 2.67 KΩ and 63.0 KΩ, respectively, in an exemplary embodiment. A suitable, commercially-available thermistor T is the Thermometrics Type Y, 10K at 25 degrees Centigrade.

In operation, the shunt resistor R alters the slope of the resistance-temperature curve of the standard valued thermistor Tₛ, while the series resistor R shifts the curve. The resultant resistance-temperature curve closely fits that of the dual-thermistor circuit of Figure 4. The resistance in ohms of the network of Figure 4 is set forth in the following table:

| **TEMP** | **R(700)** |
|---|---|
| 0 | 23706 |
| 5 | 19942 |
| 10 | 17009 |
| 15 | 14685 |
| 20 | 12804 |
| 25 | 11250 |
| 30 | 9939.7 |
| 35 | 8812.1 |
| 40 | 7829.1 |
| 45 | 6958.9 |
| 50 | 6181.6 |

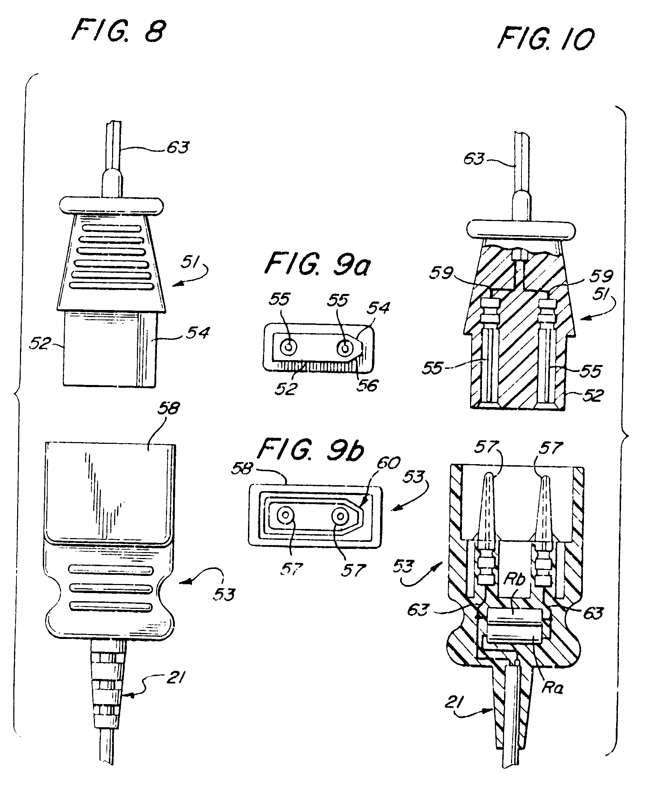

The temperature error between the resistance temperature characteristic of the circuit of Figure 4 and that of Figure 5 is plotted in Figure 6. The errors depicted in Figure 6 are low enough to permit the use of the circuit of Figure 7, including the perferred substitute thermistor circuit of Figure 5, for clinical temperature monitoring at around 30 degrees Centigrade.

In Figure 7, the simple thermistor sensor Tₛ is installed in a suitable temperature probe assembly for insertion into or attachment to a suitable body site. The series and shunt resistor Rₐ, R_{b} are connected between the thermistor element Tₛ and the input connection to the patient monitor 19, preferably in an extension cable 21. The thermistors Rₐ and R_{b} are connected to only two input points 31, 35 of the three available input points or terminals 31, 33, 35 of the typical patient temperature monitor 19 which is configured for use with a dual-thermistor probe. Terminal 33 of the patient monitor is left unconnected.

According to the preferred embodiment, the single thermistor and probe housing assembly is a disposable unit to be used once and then discarded. The thermistor Tₛ is connected to a cable 63, which includes a low cost end connector 51, as illustrated in Figures 7 to 10. The end connector 51 mates with a connector 53 formed as the termination of the extension cable 21. The connector 53 of the extension cable 21 preferably contains and encapsulates the two fixed resistors Rₐ and R_{b} , as shown in Figure 10. The cable 21 is terminated on the end opposite the connector 53 with a connector (not shown) suitable for mating with the input points 31, 35 of the input connector of the patient monitor 19.

As further shown in Figures 8 to 10, the end connector 51 of the disposable probe assembly includes a solid extended male connector shell 52 encapsulating first and second female contacts 55. The female contacts 55 are disposed in side-by-side relation to mate with respective male contacts 57 positioned in the extension cable connector 53. The male connector shell 52 is shaped to slide into a corresponding female connector shell 60 formed as part of the extension cable connector 53. The male connector shell 52 has bevelled edges 54 and 56 on one side to ensure proper polarity connection.

The female connector shell 60 is contained within an outer boot or shroud 58, which is made of a relatively pliable plastics or other material and is ribbed for strain relief. The inner female shell 53 is preferably made of harder material such as nylon to support rigidly the connector pins. Alternatively, the shroud 58 and female connector shell 53 could be fabricated as one solid piece of the same material.

Respective leads 59 are conducted through the cable 63 of the disposable probe assembly to connect to the respective opposite terminals of the single thermistor Tₛ. The cable 63 and its end connector 51 are thus on the "disposable side" of the device. Respective leads 63 attach to the respective male contacts 57 and to the resistors Rₐ, R_{b} such that the resistors Rₐ, R_{b} are connected in the manner schematically illustrated in Figure 7.

Those skilled in the art will appreciate that various adaptions and modifications of the just-described preferred embodiment can be configured without departing from the scope of the invention. Therefore, it is to be understood that, within the scope of the appended claims, the invention may be practised other than as specifically described herein.

## Claims

1. Temperature monitoring apparatus having a thermistor temperature probe (Tₛ) and a temperature monitor (19) adapted to monitor temperature at a dual thermistor probe having a first resistance versus temperature characteristic, characterised in that the thermistor temperature probe (Tₛ) is a single thermistor temperature probe having a second resistance versus temperature characteristic different from the first characteristic, that the apparatus includes a resistor arrangement comprising a shunt resistor (R_{b}) that alters the slope of the characteristic, and a series resistor (Rₐ) that adds a constant resistance to the characteristic (Rₐ, R_{b}) to simulate the first resistance versus temperature characteristic of a dual thermistor probe, and that the resistor arrangement is removably connectable between the single thermistor probe (Tₛ) and the monitor (19).

2. Temperature monitoring apparatus according to Claim 1, characterised in that the resistors (Rₐ, R_{b}) are connected to simulate a dual thermistor probe of the kind having first and second thermistors (T₁ and T₂) each having a first terminal (11) connected together and a second terminal connected together via a resistor (R₂).

3. Temperature monitoring apparatus according to Claim 1 or 2, characterised in that the resistor arrangement is a cable (21), that the resistors (Rₐ, R_{b}) are included in the cable (21), and that the cable (21) has a connector at one end connected to the single thermistor probe (Tₛ) and a connector at the other end connected to the temperature monitor (19).

4. Temperature monitoring apparatus according to Claim 3, characterised in that the resistors (Rₐ, R_{b}) are housed within one of the connectors (53) of the cable (21).

## Patentansprüche

1. Temperaturüberwachungsvorrichtung mit einem thermistorbasierten Temperaturmeßfühler (T_{*s*}) und einer Temperaturüberwachungseinheit (19) zur Überwachung der Temperatur bei einem Doppelthermistormeßfühler mit einer ersten Temperatur-Widerstands-Kennlinie, **dadurch gekennzeichnet**, daß der thermistorbasierte Temperaturmeßfühler (T_{*s*}) ein Temperaturmeßfühler mit einem Einzelthermistor ist, der eine zweite Temperatur-Widerstands-Kennlinie aufweist, welche sich voll der ersten Kennlinie unterscheidet, daß die Vorrichtung eine Widerstandsanordung mit einem Überbrückungswiderstand (R_{*b*}) umfaßt, welcher die Steigung der Kennlinie verändert und mit einem Serienwiderstand (R_{*a*}), welcher der Kennlinie (R_{*a*}, R_{*b*}) einen konstanten Widerstand überlagert, um die erste Temperatur-Widerstands-Kennlinie eines Doppelthermistormeßfühlers zu simulieren, und daß die Widerstandsanordnung lösbar zwischen den Einzelthermistormeßfühler (T_{*s*}) und die Überwachungseinheit (19) einschaltbar ist.

2. Temperaturüberwachungsvorrichtung nach Anspruch 1, **dadurch gekennzeichnet**, daß die Widerstände (R_{*a*}, R_{*b*}) zur Simulation eines Doppelthermistormeßfühlers geschaltet sind, welcher einen ersten und einen zweiten Thermistor (T₁ und T₂) umfaßt, welche über jeweils einen ersten Anschluß (11) unmittelbar und über einen zweiten Anschluß über einen Widerstand (R₂) miteinander verbinden sind.

3. Temperaturüberwachungsvorrichtung nach einem der Ansprüche 1 oder 2, **dadurch gekennzeichnet**, daß die Widerstandsanordnung ein Kabel (21) ist, die Widerstände (R_{*a*}, R_{*b*}) in diesem Kabel (21) integriert sind und daß das Kabel (21) an einem Ende einem Verbinder aufweist, der an den Einzelthermistormeßfühler (T_{*s*}) angeschlossen ist und an seinem anderen Ende einen Verbinder, der an die Temperaturüberwachungseinheit (19) angeschlossen ist.

4. Temperaturüberwachungsvorrichtung nach Anspruch 3, **dadurch gekennzeichnet**, daß sich die Widerstände (R_{*a*}, R_{*b*}) innerhalb eines der Verbinder (53) des Kabels (21) befinden.

## Revendications

1. Dispositif de surveillance de température comportant une sonde de température à thermistor (Tₛ) et un moniteur de température (19) agencé pour surveiller la température avec une sonde à deux thermistors ayant une première caractéristique de résistance en fonction de la température, caractérisé en ce que la sonde de température à thermistor (Tₛ) est une sonde à thermistor unique, ayant une seconde caractéristique de résistance en fonction de la température, différente de la première caractéristique, en ce que le dispositif comporte un réseau à résistances comprenant une résistance shunt (R_{b}), qui modifie la pente de la caractéristique, et une résistance série (Rₐ) qui ajoute une résistance constante à la caractéristique (Rₐ, R_{b}), pour simuler la première caractéristique de résistance en fonction de la température d'une sonde à deux thermistors, et en ce que le réseau à résistances est connecté de manière amovible entre la sonde à thermistor unique (Tₛ) et le moniteur (19).

2. Dispositif selon la revendication 1, caractérisé en ce que les résistances (Rₐ, R_{b}) sont connectées de manière à simuler une sonde à deux thermistors du genre comportant un premier et un second thermistor (T₁ et T₂) ayant des premières bornes respectives (11) connectées l'une à l'autre et des secondes bornes respectives connectées par l'intermédiaire d'une résistance (R₂).

3. Dispositif selon la revendication 1 ou 2, caractérisé en ce que le réseau à résistances est un câble (21), en ce que les résistances (Rₐ, R_{b}) sont incorporées au câble (21) et en ce que le câble (21), possède à une extrémité, un connecteur branché à la sonde à thermistor unique (Tₛ) et, à l'autre extrémité, un connecteur branché au moniteur de température (19).

4. Dispositif selon la revendication 3, caractérisé en ce que les résistances (Rₐ, R_{b}) sont logées dans l'un des connecteurs (53) du câble (21).
